(19) Europäisches Patentamt
European Patent Office
Office européen des brevets

(11) EP 1 055 717 A2

# (12) EUROPÄISCHE PATENTANMELDUNG

(43) Veröffentlichungstag:
**29.11.2000 Patentblatt 2000/48**

(51) Int. Cl.[7]: **C09J 175/08**, C08J 5/12, B32B 27/40, C08G 18/48

(21) Anmeldenummer: **00110167.4**

(22) Anmeldetag: **12.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **26.05.1999 DE 19924092**

(71) Anmelder:
**Bayer Aktiengesellschaft**
**51368 Leverkusen (DE)**

(72) Erfinder:
- **Reihs, Karsten, Dr.**
  **50968 Köln (DE)**
- **Rasshofer, Werner, Dr.**
  **51061 Köln (DE)**
- **Warth, Holger, Dr.**
  **41539 Dormagen (DE)**
- **Wegener, Dirk, Dr.**
  **40789 Monheim (DE)**
- **Schmidt, Manfred, Dr.**
  **41540 Dormagen (DE)**
- **Heitkämper, Peter, Dr.**
  **41542 Dormagen (DE)**

## (54) Adhäsionsstabiles Verbundmaterial aus Polyurethan und einem weiteren thermoplastischen Material, ein Verfahren zu dessen Herstellung sowie dessen Verwendung in Kraftfahrzeugen

(57) Die Erfindung betrifft Verbundmaterialien aus wenigstens einer Verbundschicht aus Polyurethan und einer damit direkt verbundenen Verbundschicht aus einem von A) unterschiedlichen thermoplastischen Kunststoff, wobei das Polyurethan der Schicht A) einen Restgehalt von freien Ethergruppen-haltigen Reaktionskomponenten von höchstens 400 ppm, vorzugsweise ≤ 100 ppm, aufweist. Weiterhin betrift die Erfindung eine Verfahren zur Herstellung dieser Verbundmaterialien sowie dessen Verwendung als Werkmaterial in Kraftfahrzeugen.

EP 1 055 717 A2

## Beschreibung

Gegenstand der vorliegenden Erfindung sind Verbundmaterialien aus wenigstens zwei unterschiedlichen, direkt miteinander verbundenen Kunststoffmaterialschichten, wovon eine Schicht aus Polyurethan und die damit direkt verbundene Schicht aus einem davon unterschiedlichen thermoplastischen Kunststoffmaterial besteht.

Es ist bekannt, daß Verbunde aus thermolastischem Material und einem Polyurethan, insbesondere einem Polyurethanschaummaterial keine ausreichende Verbundhaftung aufweisen. Diese Verbundhaftung kann durch Einsatz von Haftvermittlerschichten verbessert werden. Dies ist aber für den Einsatz in der Kfz-Industrie, wo solche Verbundmaterialien in zunehmendem Maße Verwendung finden, nicht wünschenswert, da wegen der geforderten Aufarbeitungs- und Rückführmöglichkeiten möglichst wenig unterschiedliche Materialien zum Einsatz kommen sollen.

Es stellte sich daher die Aufgabe, die Verbundhaftung zwischen einer Schicht aus Polyurethan und einer damit unmittelbar verbundenen Schicht aus einem anderen thermoplastischen Material ausreichend zu verbessern.

Die Aufgabe wird erfindungsgemäß durch Bereitstellung eines Verbundmaterials gelöst, das aus wenigstens zwei unmittelbar miteinander verbundenen Schichten bestehen, wovon

A) eine Verbundschicht aus Polyurethan aus der Umsetzung von Polyisocyanaten mit H-aktiven polyfunktionellen Verbindungen und

B) eine damit direkt verbundene Verbundschicht aus einem von A) unterschiedlichen thermoplastischen Kunststoff ist, dadurch gekennzeichnet, daß Schicht A) aus der Polyurethan-Herstellung einen Restgehalt an nicht mit der Isocyanat-Komponente reagierten Ethergruppen-haltigen Reaktionskomponenten von höchsten 400 ppm, vorzugsweise ≤ 100 ppm aufweist.

Die erfindunngsgemäß in Schicht A) zum Einsatz kommenden Polyurethane bzw. Polyurethanharnstoffe erhält man durch Umsetzung von Polyisocyanaten mit H-aktiven polyfunktionellen Verbindungen, vorzugsweise Polyolen.

Als Polyisocyanate kommen bevorzugt solche in Frage, die aus der Polyurethanchemie bekannt und dort üblicherweise eingesetzt werden. Es handelt sich dabei insbesonders um Polyisocyanate auf aromatische Basis, z.B. 2,4-Diisocyanatotoluol, dessen technische Gemische mit 2,6-Diisocyanatotoluol, 4,4'-Diisocyanatodiphenylmethan, dessen Gemische mit den entsprechenden 2,4'- und 2,2'-Isomeren, Polyisocyanatgemische der Diphenylmethanreihe, wie sie durch Phosgenierung von Anilin/Formaldehyd-Kondensation in an sich bekannter Weise gewonnen werden können, die Biuret- oder Isocyanatgruppen aufweisenden Modifizierungsprodukte dieser technischen Polyisocyanate und insbesondere NCO-Prepolymere der genannten Art auf Basis dieser technischen Polyisocyanate einerseits und den bei der nachstehend beschriebenen Komponente A) beispielhaft genannten, einfachen Polyolen und/oder Polyetherpolyolen und/oder Polyesterpolyolen andererseits, sowie beliebige Gemische derartiger Isocyanate, sofern sie ausreichend lagerstabil sind.

Unter den höhermolekuaren, modifizierten Polyisocyanaten sind insbesondere die aus der Polyurethanchemie bekannten Prepolymeren mit endständigen Isocyanatgruppen des Molekulargewichtsbereichs 400 bis 10 000 g/mol, vorzugsweise 600 bis 8 000 g/mol und insbesondere 800 bis 5 000 g/mol von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 82 bis 599 g/mol, vorzugsweise 62 bis 200 g/mol, wie z.B. Ethylenglykol, Trimethylpropan, Propandiol-1,2 oder Butandiol-1,4 oder Butandiol-2,3, insbesondere jedoch höhermolekulare Polyetherpolyole und/oder Polyesterpolyole der aus der Polyurethanchemie an sich bekannten Art mit Molekulargewichten von 600 bis 8 000 g/mol, vorzugsweise 800 bis 4 000 g/mol, die mindestens zwei, in der Regel 2 bis 8, vorzugsweise aber 2 bis 4 primäre und/oder sekundäre Hydroxylgruppen aufweisen. Selbstverständlich können auch solche NCO-Prepolymere eingesetzt werden, die beispielhaft aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind. Zur Herstellung der NCO-Prepolymeren geeignete Verbindungen mit gegenüber Isocyanatgruppen reaktionsfähigen Gruppen, insbesondere Hydroxylgruppen, sind beispielsweise die in US-PS 4 218 543, Spalte 7, Zeile 29 bis Spalte 9, Zeile 25 beispielhaft offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO-Überschusses zur Umsetzung gebracht. Die NCO-Prepolymeren weisen im allgemeinen einen NCO-Gehalt von 10 bis 25, vorzugsweise 15 bis 22 Gew.-% auf. Hieraus geht bereits hervor, daß im Rahmen der vorliegenden Erfindung unter "NCO-Prepolymeren" bzw. unter "Prepolymeren mit endständigen Isocyanatgruppen" sowohl die Umsetzungsprodukte als solche als auch ihre Gemische mit überschüssigen Megen an nicht umgesetzten Ausgangspolyisocyanaten, die oft auch als "Semiprepolymere" bezeichnet werden, zu verstehen sind.

Die Polyisocyanatkomponente besitzt eine mittlere Funktionalität von 2 bis 3, bevorzugt 2,3 bis 2,7.

Zur Einstellung eines bestimmten NCO-Gehalts der Isocyanat-Komponente kann es sinnvoll sein, Anteile von Roh-MDI mit einem NCO-Prepolymeren abzumischen. Die im Roh-MDI enthaltenen Anteile an höherfunktionellem Material (Funktionalität > 4) können ohne weiteres toleriert werden, sofern die mittlere Funktionalität von 3 bis der Isocyanat-Komponente nicht überschritten wird.

Als aliphatische Diole mit einer OH-Zahl von >200 mg KOH/g, bevorzugt > 500 mg KOH/g, kommen die üblicherweise in der Polyurethanchemie vernetzten Kettenverlängerer in Betracht, wie Ethylenglykol, Diethylenglykol, Propylenglykol, Dipropylenglykol, Butandiol-1,4, Propandiol-1,3. Bevorzugt sind Diole, die eine verbesserte Verträglichkeit mit den Polyolen (ii) der Komponente B) aufweisen. Genannt werden z.B. Butandiol-1,4, Butandiol-1,3, Butandiol-2,3, 2-Methylpropandiol-1,3. Selbstverständlich ist es auch möglich, die aliphatischen Diole im Gemisch untereinander einzusetzen.

Als H-aktive Komponente eignen sich Polyole mit einer mittleren OH-Zahl von 5 bis 500 mg KOH/g und einer mittleren Funktionalität von 2 bis 4. Bevorzugt sind solche mit einer mittleren OH-Zahl von 10 bis 50 mg KOH/g und einer mittleren Funktionalität von 2,7 bis 3. Solche Polyole sind z.B. Polyhydroxypolyether, die aus der Polyurethanchemie bekannt sind und die durch Alkoxylierung geeigneter Startermoleküle wie Ethylenglykol, Diethylenglykol, 1,4-Dihydroxybutan, 1,6-Dihydroxyhexan, Dimethylolpropan, Glycerin, Pentaerythrit, Sorbit oder Saccharose zugänglich sind. Als Starter können ebenfalls fungieren Ammoniak oder Amine, wie Ethylendiamin, Hexamethylendiamin, 2,4-Diaminotoluol, Anilin oder Aminoalkohole oder Phenole wie Bisphenol A. Die Alkoxylierung erfolgt unter Verwendung von Propylenoxid und/oder Ethylenoxid in beliebiger Reihenfolge.

Ferner geeignet sind bevorzugt Polyesterpolyole, wie sie durch Umsetzung niedermolekularer Alkohole mit mehrwertigen Carbonsäuren, wie Adipinsäure, Phthalsäure, Hexahydrophthalsäure, Tetrahydrophthalsäure oder den Anhydriden dieser Säuren in an sich bekannter Weise zugänglich sind, sofern die Viskosität der H-aktiven Komponente nicht zu groß wird. Ein bevorzugtes Polyol, das Estergruppen aufweist, ist Rizinusöl. Daneben sind auch Zubereitungen mit Rizinusöl, wie sie durch Auflösung von Harzen, z.B. von Aldehyd-Keton-Harzen, erhalten werden können, sowie Modifikationen von Rizinusöl und Polyole auf Basis anderer natürlicher Öle geeignet.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Derartige Verfahren sind beispielsweise in DE-AS 1 168 075 und 1 280 142 sowie DE-A-2 324 134, 2 423 984, 2 512 385, 2 513 815, 2 550 796, 2 550 797, 2 550 833, 2 550 882, 2 633 293 und 2 639 254 beschrieben. Es ist aber auch möglich, gemäß US-A-3 869 413 bzw. DE-A-2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-A-3 383 351, 3 304 273, 3 523 093, 3 110 695; DE-A-1 152 5369 oder Polycarbonatpolyolen (DE-B 1 769 795; US-A-3 637 909) erhalten werden, sind für die Herstellung von Polyurethanen geeignet. Bei Verwendung von Polyetherpolyolen, welche gemäß DE-A-2 442 101, 2 844 922 und 2 646 141 durch Pfropfpolymerisation mit Vinylphosphonsäureestern sowie gegebenenfalls (Meth)acrylnitril, (Meth)acrylamid oder OH-funktionellen (Methyl-acrylsäureestern modifiziert wurden, erhält man Kunststoffe von besonderer Flammwidrigkeit.

Vertreter der genannten als H-aktiven Verbindungen zu verwendenden Verbindungen sind z.B. in High Polymers, Vol. XVI, "Polyurethanes Chemistry and Technology", verfaßt von Saunders-Frisch, Interscience Publishers, New York, London, Band 1, 1982, Seiten 32 - 42 und Seiten 44 - 54 und Band II, 1984, Seiten 5 - 6 und 198 - 199, sowie im Kunststoff-Handbuch, Band VII, Carl Hanser Verlag, München, 1983, z.B. auf den Seiten 45 - 61, beschrieben.

Selbstverständlich können auch Gemische der aufgezählten Verbindungen eingesetzt werden.

Die Begrenzung der mittleren OH-Zahl und mittleren Funktionalität der H-aktiven Komponente ergibt sich insbesondere aus der zunehmenden Versprödung des resultierenden Polyurethans, Grundsätzlich sind dem Fachmann aber die Einflußmöglichkeiten auf die polymer-physikalischen Eigenschaften des Polyurethans bekannt, so daß NCO-Komponente, aliphatisches Diol und Polyol in günstiger Weise aufeinander abgestimmt werden können.

Die Verbundschicht A) kann geschäumt oder massiv, wie z.B. als Lack oder Beschichtung vorliegen.

Dabei können alle an sich bekannten Hilfs- und Zusatzstoffe wie z.B. Trennmittel, Treibmittel, Füllstoffe, Katalysatoren und Flammschutzmittel eingesetzt werden.

Gegebenenfalls als Hilfs- und Zusatzmittel sind dabei zu verwenden:

a) Wasser und/oder leicht flüchtige anorganische oder organische Substanzen als Treibmittel. Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel z.B. Luft, $CO_2$ oder $N_2O$, in Frage, Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoffhandbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

b) Katalysatoren der an sich bekannten Art, z.B. tertiäre Amine, wie Triethylamin, Tributylamin, N-Methyl-morpholin, N-Ethyl-morpholin, N,N,N',N'-Tetramethylethylendiamin, Pentamethyl-diethylen-triamin und höhere Homologe (DE-Offenlegungsschriften 2 624 527 und 2 624 528), 1,4-Diaza-bicyclo-(2,2,2)-octan, N-Methyl-N'-dimethylaminoethyl-piperazin, Bis-(dimethylaminoalkyl)piperazine (DE-Offenlegungsschrift 2 737 787), N,N-Dimethylbenzylamin, N,N-Dimethylcyclohexylamin, N,N-Diethylbenzyl-amin, Bis-(N,N-diethylaminoethyl)-adipat, N,N,N',N'-Tetramethyl-1,3-butandiamin, N,N-Dimethyl-β-phenyl-ethylamin, 1,2-Dimethylimidazol, 2-Methylimidazol, monocyclische und bicyclische Amidine (DE-Offenlegungsschrift 1 720 633), Bis-(dialkylamino)-alkyl-ether (US-Patentschrift 3 330 782, DE-Auslegungsschrift 1 030 558, DE-Offenlegungsschriften 1 804 361 und 2 618 280) sowie Amidgruppen (vorzugsweise Formamidgruppen) aufweisende tertiäre Amine gemäß der DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundäre-tertiäre Amine gemäß DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diethyl-aminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natrimmethylat in Betracht. Auch Hexahydrotriazine können als Katalysatoren eingesetzt werden (DE-Offenlegungsschrift 1 769 043).

Die Reaktion zwischen NCO-Gruppen und aktiven Wasserstofatomen wird auch durch Lactam und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 286, 2 062 289, 2 117 576 (US-Patentschrift 3 758 444), 2 129 198, 2 330 175 und 2 330 211 beschrieben.

Es können auch organische Metallverbindungen, insbesondere organische Zinnverbindungen, als Katalysatoren, verwendet werden. Als organische Zinnverbindungen kommen neben schwefelhaltigen Verbindungen wie Dinoctyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-ethylhexoat und Zinn(II)-laurat und die Zinn-(IV)-Verbindungen, z.B. Dibutylzinnoxid, Dibutylzinndichlorid, Dibutylzinndiacetat, Dibutylzinndilaurat, Dimethylzinndilaureat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegunggsschriften 2 434 185, 2 601 802 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew-%, bezogen auf die Gesamtmenge an Verbindungen mit mindestens zwei, gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z.B. die Natriumsalze von Ricinusöl-sulfonaten oder Salze von Fettsäuren mit Aminen, wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mit verwendet werden.

Als Schaumstabilisatoren kommen Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-Offenlegungsschrift 2 558 523.

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat oder Ammoniumphospat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuwendenden oberflächenaktiven Zusatzstoffen und Schaumstabilisatoren sowie Zellreglern, Reaktionsverzögerern, Stabilisatoren, flammhemmenden Substanzen, Weichmacher, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München, 1966, z.B. auf den Seiten 103 bis 113 beschrieben.

Als thermoplastische Kunststoffe der Schicht B) eignen sich alle bekannten Thermoplasten, vorzugsweise thermoplastische Polyolefine, wie z.B. Polypropylene oder Polyethylene, Polycarbonate, Polyestercarbonate, Styrolcopolymerisate, kautschukhaltige Pfropfstyrol-Copolymerisate wie ABS-Polymerisate, Polyamide und/oder deren thermoplastische Mischungen.

Insbesondere eignen sich folgende Polymere als thermoplastischer Kunststoff B):

Polyolefine wie Polyethylen hoher und niedriger Dichte, d.h. Dichten von 0,91 g/cm$^3$ bis 0,97 g/cm$^3$, die nach bekannten Verfahren, Ullmann (4.), 19, Seite 167 ff, Winnacker-Kückler (4.), 6, 353 bis 367, Elias u. Vohwinkel, Neue Polymere Werkstoffe für die industrielle Anwendung, München, Hanser 1983, hergestellt werden können.

Weiterhin eignen sich Polypropylene mit Molekulargewichten von 10.000 g/mol bis 1.000.000 g/mol, die nach bekannten Verfahren, Ullmann (5.) A10, Seite 615 ff., Houben-Weyl E20/2,Seite 722 ff., Ullmann (4.) 19, Seite 195 ff., Kirk-Othmer (3.) 16, Seite 357 ff., hergestellt werden können. Es sind aber auch Copolymerisate der genannten Olefine oder mit weiteren $\alpha$-Olefinen möglich, wie beispielsweise

Polymere aus Ethylen mit Buten, Hexen und/oder Octen
EVA (Ethylenvinylacetatcopolymerisate)
EEA (Ethylenethylacrylatcopolymerisate)
EBA (Ethylenbutylacrylatcopolymerisate)
EAS (Acrylsäureethylenacrylatcopolymerisate)
EVK (Ethylenvinylcarbazolcopolymerisate)
EPB (Ethylen-propylen-Blockcopolymere)
EPDM (Ethylen-Propylen-Dien-Copolymerisate)
PB (Polybutylene)
PMP (Polymethylpentene)
PIB (Polyisobutylene)
NBR (Acrylnitrilbutadiencopolymerisate)
Polyisoprene
Methyl-butylencopolymerisate
Isopren-isobutylencopolymerisate

Herstellungsverfahren: solche Polymerisate sind z.B. in Kunststoff-Handbuch, Band IV, München, Hanser-Verlag, Ullmann (4.), 19, Seite 167 ff, Winnacker-Kückler (4.) 6, 353 bis 367, Elias u. Vohwinkel, Neue Polymere Werkstoffe, München, Hanser 1983, Franck u. Biederbick, Kunststoff Kompendium Würzburg, Vogel 1984, offenbart.

Erfindungsgemäß geeignete thermoplastische Kunststoffe für die Verbundschicht B) sind auch thermoplastische, aromatische Polycarbonate, insbesondere solche auf Basis der Diphenole der Formel (I)

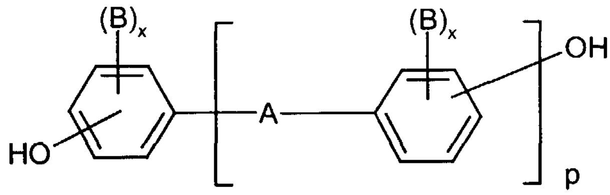

(I)

worin

A eine Einfachbindung, $C_1$-$C_5$-Alkylen, $C_2$-$C_5$-Alkyliden, $C_5$-$C_6$-Cycloalkyliden, -S-, -$SO_2$-, -O-, -CO-, oder ein $C_6$-$C_{12}$-Arylen-Rest, der gegebenenfalls mit weiteren, Heteroatome enthaltenden aromatichen Ringen kondensiert sein kann,

die Reste B, unabhängig voneinander, jeweils ein $C_1$-$C_8$-Alkyl, $C_6$-$C_{10}$-Aryl, besonders bevorzugt Phenyl, $C_7$-$C_{12}$-Aralkyl, bevorzugt Benzyl, Halogen, bevorzugt Chlor, Brom,

x unabhängig voneinander, jeweils 0, 1 oder 2 und

p 1 oder 0 bedeuten,

oder alkylsubstituierte Dihydroxyphenylcycloalkane der Formel (II),

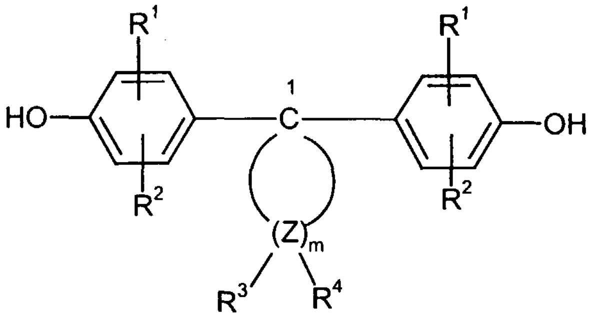

(II)

worin

$R^1$ und $R^2$, unabhängig voneinander, jeweils Wasserstoff, Halogen, bevorzugt Chlor oder Brom, $C_1$-$C_8$-Alkyl, $C_5$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes Z individuell wählbar, unabhängig voneinander, Wasserstoff oder $C_1$-$C_6$-Alkyl, vorzugsweise Wasserstoff, Methyl oder Ethyl,
und

Z Kohlenstoff bedeutet, mit der Maßgabe, daß an mindestens einem Atom Z $R^3$ und $R^4$ gleichzeitig Alkyl bedeuten.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.
Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (II) sind Dihydroxydiphenylcycloalkane mit 5 und 6 Ring-C-Atomen im cycloaliphatischen Rest [(m = 4 oder 5 in Formel (II)] wie beispielsweise die Diphenole der Formeln

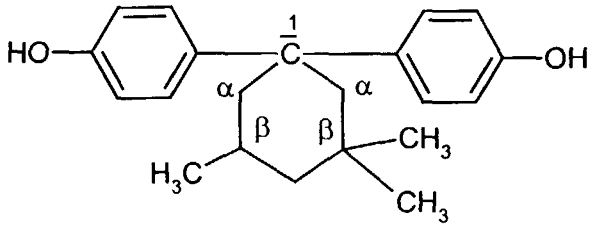

(IIa)

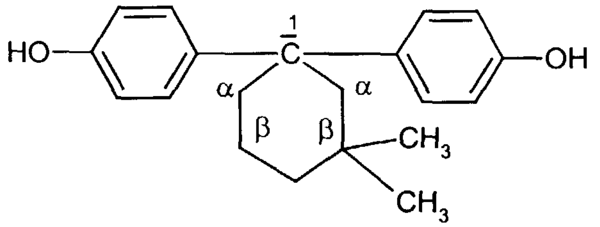

(IIb) und

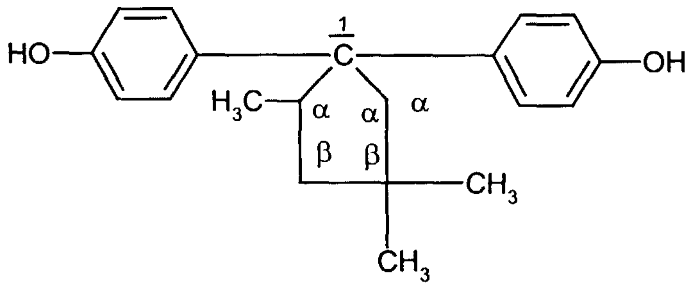

(IIc),

wobei
das 1,1-Bis-(4-hydroxyphenyl)-3,3,5-trimethylcyclohexan (Formel 11c) besonders bevorzugt ist.

Die erfindungsgemäß geeigneten Polycarbonate können in bekannter Weise verzweigt sein, und zwar vorzugsweise durch den Einbau von 0,05 bis 2,0 mol-%, bezogen auf die Summe der eingesetzten Diphenole, an drei- oder mehr als dreifunktionellen Verbindungen, z.B. solchen mit drei oder mehr als drei phenolischen Gruppen, beispielsweise

Phloroglucin,
4,6-Dimethyl-2,4,6-tri-(4-hydroxyphenyl)-hepten-2,
4,6-Dimethyl-2,4,6-tri-(4-hydroxyphenyl)-hepten,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl-propan,
2,4-Bis-(4-hydroxyphenyl)-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4'-,4''-dihydroxytriphenyl)-methyl)-benzol.

Einige der sonstigen dreifunktionellen Verbindungen sind 2,4-Dihydroxybenzoesäure, Trimesinsäure,

Cyanurchlorid und 3,3-Bis-(3-methyl-4-hydroxyphenyl)-2-oxo-2,3-dihydroindol.

Bevorzugte Polycarbonate sind neben dem Bisphenol-A-Homopolycarbonat die Copolycarbonate von Bisphenol A mit bis zu 15 mol-%, bezogen auf die mol-Summe an Diphenolen, an 2,2-Bis-(3,5-dibrom-4-hydroxyphenyl)-propan.

Die zur Herstellung der Verbundschicht B) zum Einsatz kommenden aromatischen Polycarbonate können teilweise durch aromatische Polyestercarbonate ausgetauscht werden.

Aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964).

Die Herstellung aromatischer Polycarbonate und/oder aromatischer Polyestercarbonate kann z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung der Kettenabbrecher und gegebenenfalls unter Verwendung der trifunktionellen oder mehr als trifunktionellen Verzweiger erfolgen.

Weiterhin sind als thermoplastische Kunststoffe für die Schicht B) Styrol-Copolymerisate von einem oder wenigstens zwei ethylenisch ungesättigten Monomeren (Vinylmonomeren) geeignet, wie beispielsweise von Styrol, $\alpha$-Methylstyrol, kernsubstituierten Styrolen, Acrylnitril, Methacrylnitril, Methmethacrylat, Maleinsäureanhydrid, N-substituierte Maleinimide und (Meth)-Acrylsäureester mit 1 bis 8 C-Atomen in der Alkoholkomponente.

Die Copolymerisate sind harzartig und kautschukfrei.

Bevorzugte Styrol-Copolymerisate sind solche aus wenigstens einem Monomeren aus der Reihe Styrol, $\alpha$-Methylstyrol und/oder kernsubstituiertes Styrol mit wenigstens einem Monomeren aus der Reihe Acrylnitril, Methacrylnitril, Methylmethacrylat, Maleinsäureanhydrid und/oder N-substituiertem-Maleinimid.

Besonders bevorzugte Gewichtsverhältnisse im thermoplastischen Copolymerisat sind 60 bis 95 Gew.-% der Styrolmonomeren und 40 bis 5 Gew.-% der weiteren Vinylmonomeren.

Besonders bevorzugte Copolymerisate sind solche aus Styrol mit Acrylnitril und gegebenenfalls mit Methylmethacrylat, aus $\alpha$-Methylstyrol mit Acrylnitril und gegebenenfalls mit Methylmethacrylat, oder aus Styrol und $\alpha$-Methylstyrol mit Acrylnitril und gegebenenfalls mit Methylmethacrylat.

Die Styrol-Acrylnitril-Copolymerisate sind bekannt und lassen sich durch radikalische Polymerisation, insbesondere durch Emulsions-, Suspensions-, Lösungs- oder Massepolymerisation herstellen. Die Copolymerisate besitzen vorzugsweise Molekulargewichte $M_w$ (Gewichtsmittel, ermittelt durch Lichtstreuung oder Sedimentation) zwischen 15 000 und 200.000 g/mol.

Besonders bevorzugte Copolymerisate sind auch statistisch aufgebaute Copolymerisate aus Styrol und Maleinsäureanhydrid, die bevorzugt durch eine kontinuierliche Masse- oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Anstelle von Styrol können die Polymeren auch kernsubstituierte Styrole, wie p-Methylstyrol, 2,4-Dimethylstyrol und andere substituierte Styrole, wie $\alpha$-Methylstyrol enthalten.

Die Molekulargewichte (Zahlenmittel $\overline{M}_n$) der Styrol-Maleinsäureanhydrid-Copolymeren können über einen weiten Bereich variieren. Bevorzugt ist der Bereich von 60 000 bis 200 000 g/mol. Bevorzugt ist für diese Produkte eine Grenzviskosität von 0,3 bis 0,9 (gemessen in Dimethylformamid bei 25°C).

Geeignet als thermoplastische Kunststoffe für die Schicht B) sind auch Pfropf-Copolymerisate. Diese umfassen Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der organischen Chemie" (Houben.Weyl), Bd. 14/1, Georg Thieme-Verlag Stuttgart 1961, S. 393-406 beschrieben sind. Bevorzugte Pfropfpolymerisate sind partiell vernetzt und besitzen Gelgehalte von über 20 Gew.-%, vorzugsweise üer 40 Gew.-%, insbesondere über 60 Gew.-%.

Bevorzugt zum Einsatz kommende Pfropf-Copolymerisate sind z.B. Copolymerisate aus Styrol und/oder Acrylnitril und/oder (Meth)-Actylsäurealkylestern gepfropft auf Polybutadien, EPDM, Butadien/Styrol-Copolymerisate und Acrylkautschuke beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene.

Besonders bevorzugte Polymerisate sind z.B. ABS-Polymerisate.

Die Pfropf-Copolymerisate können nach bekannten Verfahren wie Masse-, Suspensions-, Emulsions- oder Masse-Suspensionsverfahren hergestellt werden.

Als thermoplastische Polyamide können für die erfindungsgemäßen Verbunde Polyamid 66 (Polyhexamethylenadipinamid) oder Polyamide von cyclischen Lactamen mit 5 bis 12 C-Atomen, bevorzugt von Laurinlactam und besonders bevorzugt ε-Caprolactam = Polyamid 6 (Polycaprolactam) oder Copolymaide mit Hauptbestandteilen 6 oder 66 oder Abmischungen mit Hauptbestandteil der genannten Polyamide verwendet werden. Bevorzugt ist durch aktivierte anionische Polymerisation hergestelltes Copolyamid mit Hauptbestandteil Polycaprolactam.

Die aktivierte anionische Polymerisation von Lactamen zu Polyamiden wird in technischem Maßstab so durchgeführt, daß man einerseits eine Lösung von Katalysator in Lactam, gegebenenfalls mit Schlagzähmodifikator, und andererseits eine Lösung von Aktivator in Lactam herstellt, wobei üblicherweise beide Lösungen so zusammengesetzt sind, daß ein Zusammengeben im gleichen Verhältnis die gewünschte Gesamtrezeptur ergibt. Das ist jedoch nicht notwendig. Man kann ebenso andere Zusammensetzungen wählen, beispielsweise eine konzentrierte Aktivatorsowie Katalysatorschmelze zu einer Lactamschmelze dosieren. Weitere Additive können je nach Verträglichkeiten in die Aktivator-, Katalysator- oder gegebenenfalls Lactamschmelze gegeben werden.

Die Polymerisation erfolgt durch Vermischen der Einzellösungen zur Gesamtrezeptur bei 80°C bis 200°C, bevorzugt 100°C bis 140°C.

Der Katalysator ist ein Alkali- oder Erdalkalilactamat, bevorzugt als Lösung in Lactam, besonders bevorzugt Natriumcaprolactamat in ε-Caprolactam.

Der Aktivator im erfindungsgemäßen Sinne können N-Alkyllactame oder Säurechloride oder, bevorzugt, aliphatische Isocyanate, besonders bevorzugt Oliogomere des Hexamethylendiisocyanats sein. Als Aktivator kann sowohl die Reinsubstanz wie auch bevorzugt eine Lösung, beispielsweise in N-Methylpyrrolidon, dienen.

Die Verbunde können in bekannter Weise hergestellt werden. Vorzugsweise wird die Verbundschicht B) aus thermoplastischen Polymeren vorgefertigt und darauf das Polyurethanreaktionssystem aufgebracht und ausreagiert. Je nach Reaktivität der Polyurethanreaktionskomponenten können diese bereits vorgemischt sein oder während des Auftragens in bekannter Weise vermischt werden. Das Auftragen erfolgt vorzugsweise durch Sprühen, Rakeln oder Kalandrieren. Es ist aber auch möglich, die erfindungsgemäßen Verbunde durch Coextrusion nach bekannten Methoden herzustellen.

Insbesondere werden die Polyurethan-Reaktionskomponenten nach dem an sich bekannten Einstufenverfahren, dem Prepolymerverfahren oder dem Semiprepolymerverfahren zur Umsetzung gebracht.

Bei der PU-Schaumstoffherstellung kann erfindungsgemäß die Verschäumung auch in geschlossenen Formen durchgeführt werden. Dabei wird das Reaktionsgemisch in eine Form eingetragen, in der sich bereits die Verbundschicht B) befindet. Als Formmaterial kommt Metall, z.B. Aluminium, oder Kunststoff, z.B. Epoxidharz, in Frage. In der Form schäumt das schäumfähige Reaktionsgemisch auf und bildet den Verbund-Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Dabei kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "over-charging" gearbeitet; eine derartige Verfahrensweise ist allgemein bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden.

Erfindungsgegmäß lassen sich auch kalthärtende Schaumstoffe herstellen.

Selbstverständlich können aber auch Schaumstoffe durch Blockverschäumung oder nach dem an sich bekannten Doppeltransportbandverfahren hergestellt werden, das für die kontinuierliche Herstellung der erfindungsgemäßen Verbunde bevorzugt ist.

Bevorzugt wird auch die Herstellung von Polyurethan-Verbundkörpern in Sandwichbauweise. Das Verfahren kann dabei sowohl als Depot- oder Hüllbauverfahren ausgestattet sein. Sowohl die Depotbauweise als auch die Hüllbauweise sind an sich bekannt. Im Depotverfahren (Füllbauweise) werden zwei Halbschalen (z.B. Deckschichten aus Kunststoffen) vorgefertigt, in ein Werkzeug eingelegt und der Hohlraum zwischen den Schalen mit dem PUR-Schaum ausgeschäumt. In der Hüllbauweise wird ein Kern aus PUR-Schaum in einem Werkzeug vorgelegt und dann mit einem geeigneten Hüllmaterial, z.B. mit einem der genannten Thermoplasten, umhüllt. Bei der Herstellung der Sandwich-Verbundkörper ist die Hüllbauweise bevorzugt.

Für die Herstellung kompakter PUR-Materialien werden die beiden PU Reaktionskomponenten, wie oben dargestellt durch einfaches Vermischen bei Raumtemperatur zur Reaktion gebracht werden.

Eine anschließende weitere Beschichtung der Schicht kann durch die üblichen bekannten Verfahren der Lackierung, Metallisierung oder weitere Beschichtung mit einer polymeren Schicht (z.B. wie die Schicht A) vorgenommen werden.

Die erfindungsgemäßen Verbunde werden vorzugsweise bei der KFZ-Herstellung verwendet, insbesondere bei der Innenauskleidung, z.B. als Beschichtungsmaterial von Armaturenbrettern oder Säulenverkleidungen.

Die Erfindung wird durch nachfolgende Beispiele erläutert.

**Beispiele**

Der Gehalt an Ethergruppen-haltigen, nicht reagierten Reaktionskomponenten im Polyurethan der Schicht A wird wie folgt bestimmt:

Die polymere Schicht A) wird mechanisch von dem Verbund getrennt, mechanisch zerkleinert und mit Lösungsmitteln, wie Methylenchlorid extrahiert. Eine Bestimmung von nicht reagierten Polyetherbestandteilen ist dann im Extrakt chromatographisch in Verbindung mit NMR-Spektroskopie oder IR-Spektroskopie möglich.

Die Verbundhaftung wird, wie folgt, in Anlehnung an DIN 53 357 getestet:

Die polymere Schicht A) wird als dünner Film gemäß der entsprechenden DIN-Norm auf den Träger B) aufgetragen. Anschließend wird die Trennkraft bei der Trennung des Verbundes durch z.B. einen üblichen Rollenschälversuch in Anlehnung an DIN 53 357 gemessen.

Beispiel 1

Eine Polyurethanschicht A) wird in folgender Zusammensetzung auf einen polymeren Träger B) bestehend aus Polycarbonat basierend auf Bis-phenol-A (Molmasse $M_n$ = 12.000 g/mol) aufgebracht:

Dazu wird ein Polyether, hergestellt aus Propylenoxid und Ethylenoxid (Funktionalität = 3) mit einer Molmasse von $M_n$ = 7.000 g/mol mit 4,4'-Diisocyanatodiphenylmethan (MDI) und Wasser (1 Gew.-% bezogen auf MDI) in stöchiometrischen Verhältnissen (NCO:OH) gründlich vermischt. Zur Simulation von freiem, nicht reagierten Polyether wird ein Anteil von 4 000 ppm eines Polyethylenoxids gleicher Molmase ($M_n$ = 7 000 g/mol) mit nicht reaktiven Endgruppen (Endgruppen:Diphenylmethyl) und Methyl) zugegeben. Anschließend wird die Mischung sofort auf den Polycarbonat-Träger B) gegossen, wobei ein Gießrahmen um den Polycarbonat-Träger für eine einheitliche Schichtdicke sorgt.

Nach Lagerung derartiger Verbundkörper unter Einsatzbedingungen des techischen Produktes (0 bis 14 Tage Lagerung bei 80°C und 80 % rel. Feuchte) wird die Polyurethanschaum-Schicht durch Abschälen von 20 mm breiten Probenstreifen entfernt (90° Rollenschälversuch) und die Trennkraft zur Bestimmung der Verbundhaftung gemessen. Nach der Trennung des Substrates von der Polyurethanschicht wird durch Röntgenphotoelektronen-Spektroskipie (XPS) der Anteil an Polyether auf der Substratoberfläche durch Bestimmung des C-O Anteils der C1s-Linie ermittelt.

Die zeitliche Zunahme des Polyetheranteils auf der getrennten Substratoberfläche zeigt Abbildung 1. In der Abbildung 2 ist erkennbar, daß eine Zunahme des Polyetheranteils an der Grenzfläche im Verlauf der Lagerung (bestimmt durch den C-O Anteil durch XPS an der getrennten Substratoberfläche) zu einer Abnahme der Verbundhaftung führt.

**Beispiel 2**

Beispiel 1 wurde analog wiederholt, jedoch erfolgte eine Zugabe eines nicht reaktiven Polyetheranteils von 400 ppm anstelle 4 000 ppm (Polyethylenoxid, $M_n$ = 7 000 g/mol mit nicht reaktiven Endgruppen: Dimethyl und Methyl) Die zeitliche Zunahme des Polyetheranteils auf der getrennten Substratoberfläche stieg nach 14 Tagen bis auf C-O Anteile von 20 Atom% mit Trennkräften von 2,5 N. Der geringere Anteil des nicht reagierten Polyethers gegenüber Beispiel 1 zeigt somit eine deutlich geringere Abnahme der Trennkraft.

**Vergleichsbeispiel 3**

Beispiel 1 wurde ohne Zugabe des nicht reagierten Polyetheranteils bis zu Lagerzeiten von 30 Tagen bei 80°C und 80% rel. Feuchte wiederholt. Die Trennkraft zur Bestimmung der Verbundhaftung betrug in allen Fällen > 6N.

Aus den 3 Beispielen geht somit hervor, daß die Verbundhaftung stark abnimmt, wenn der nicht reagierte Restgehalt der Ethergruppen-haltigen Komponente über 400 ppm steigt.

**Patentansprüche**

**1.** Verbundmaterial unmitelbar miteinander verbundenen Schichten unterschiedlicher Kunststoffe, wovon

A) eine Verbundschicht aus Polyurethan und

B) eine damit direkt verbundene Verbundschicht aus einem von A) unterschiedlichen thermoplastischen Kunststoff ist,

dadurch gekennzeichnet, daß Schicht A) aus der Polyurethan-Herstellung einen Restgehalt von Ethergruppen-haltigen Reaktionskomponenten von höchsten 400 ppm, vorzugsweise ≤ 100 ppm aufweist.

2. Verbundmaterial nach Anspruch 1, dadurch gekennzeichnet, daß die Verbundschicht A) ein Polyurethanschaum oder Polyurethanlack ist.

3. Verbundmaterial 1 oder 2, dadurch gekennzeichnet, daß die Verbundschicht B) aus Polycarbonat, Polyestercarbonat, Styrolcopolymerisat oder einem entsprechenden Pfropfcopolymerisat oder aus deren Mischungen besteht.

4. Verbundmaterial nach Anspruch 1 oder 2, dadurch gekennzeichnet, daß als thermoplastischer Kunststoff der Verbundschicht B) ein Polyolefin, vorzugsweise Polyethylen, Polypropylen oder Ethylenpropylencopolymerisat, oder ein Polyamid, vorzugsweise Polyamid-6 oder Polyamid-6,6 verwendet wird.

5. Verbundmaterial nach Anspruch 3, dadurch gekennzeichnet, daß der Restgehalt der Ethergruppen-haltigen Reaktionskomponenten im Polyurethanschaum der Verbundschicht A) höchtens 100 ppm beträgt und die Verbundschicht B) aus Polycarbonat besteht.

6. Verfahren zur Herstellung eines Verbundsmaterials aus wenigstens zwei unmittelbar miteinander verbundenen Schichten unterschiedlicher Kunststoffe, wovon

   A) eine Verbundschicht aus Polyurethan und

   B) eine damit direkt verbundene Verbundschicht aus einem von A) unterschiedlichen Kunststoff ist,

   dadurch gekennzeichnet, daß man die Schicht A) mit einem Restgehalt von Ethergruppen-haltigen Reaktionskomponenten von höchstens 400 ppm, vorzugsweise < 100 ppm, auf die Schicht B) aufbringt.

7. Verwendung eines Verbundes nach einem oder mehreren der Ansprüche 1 bis 5 als Werkmaterial im Kraftfahrzeugbau.

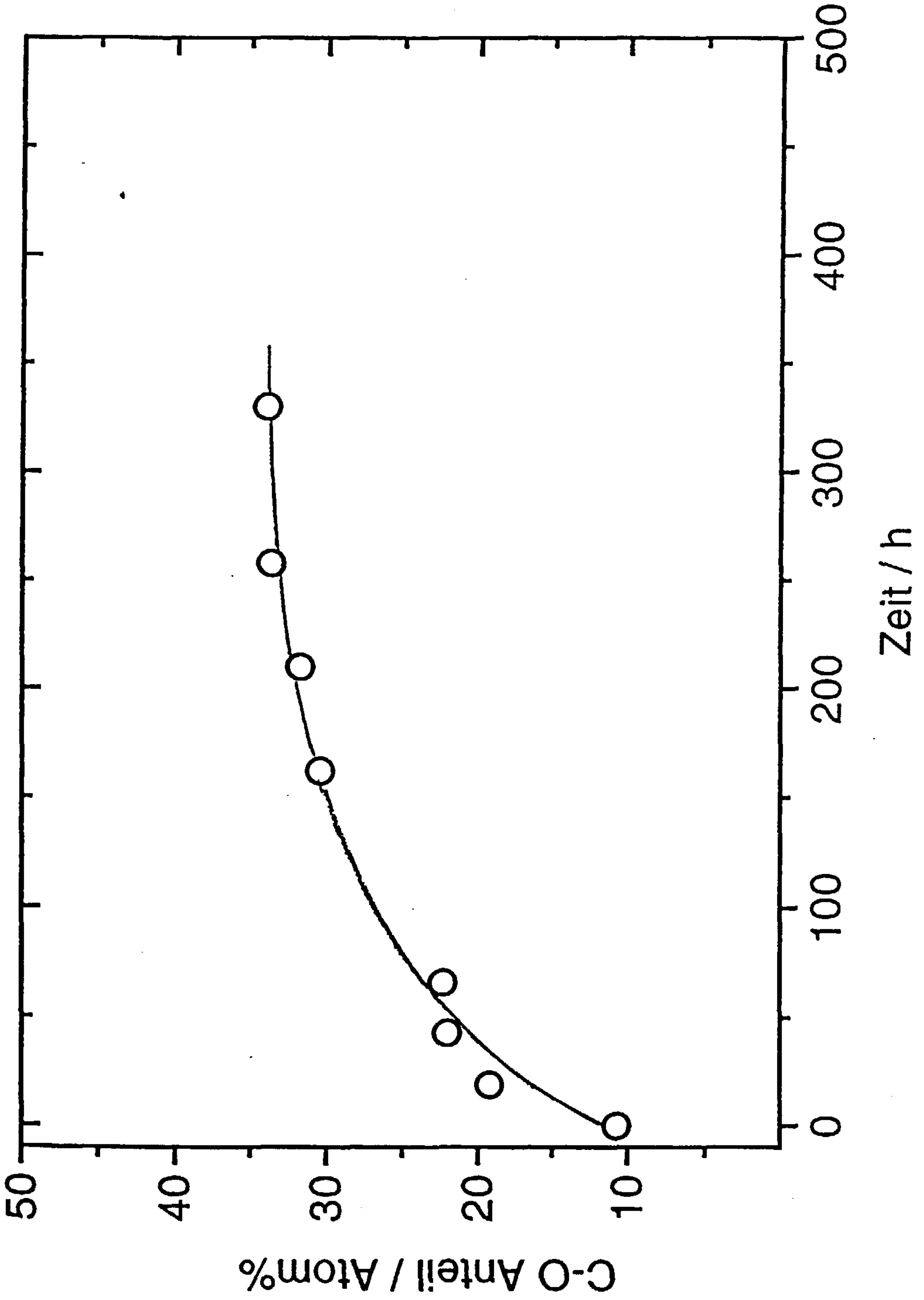


Fig. 1

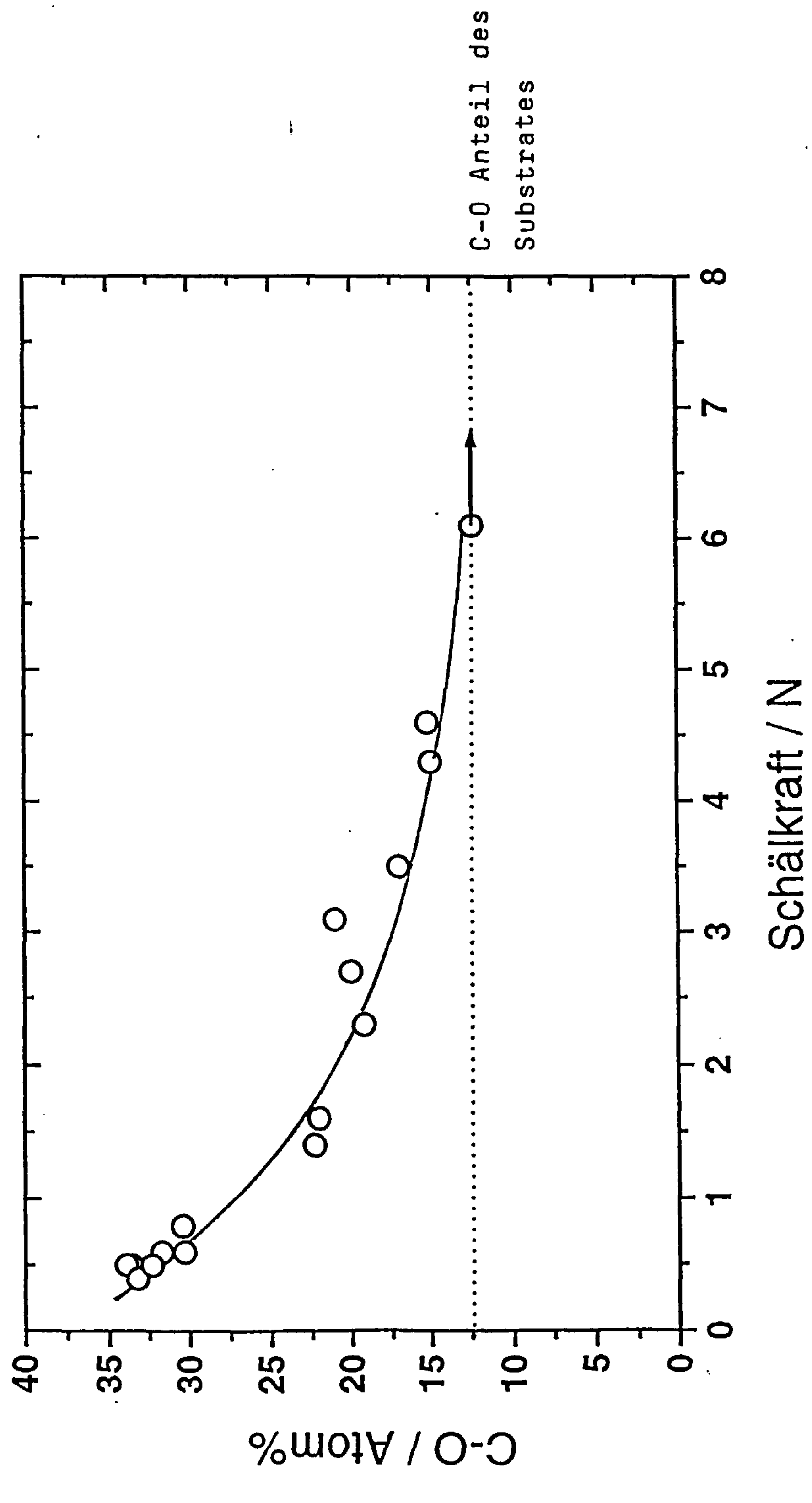
C-O Anteil des Substrates
Schälkraft / N
C-O / Atom%
0
1
2
3
4
5
6
7
8
0
5
10
15
20
25
30
35
40

Fig. 2